# EUROPEAN PATENT APPLICATION

(11) **EP 2 341 677 A2**
(43) Date of publication of application: **06.07.2011**
(21) Application number: 10195646.4
(22) Date of filing: 17.12.2010
(51) Int. Cl.: H04L 27/22

(54) **Apparatus and method for multi-stage analog demodulation**

(30) Priority: 31.12.2009 US 649920
(71) Applicant: NXP B.V., 5656 AG Eindhoven (NL)
(72) Inventor: Witschnig, Harald, 5656 AE, Eindhoven (NL); Perktold, Lukas, 5656 AE, Eindhoven (NL)
(74) Representative: Krott, Michel

(57) **Abstract**

A multi-stage demodulation circuit receives a given communication signal modulated by a superposition of at least a first modulation scheme and a second modulation scheme, the circuit having a first demodulation stage that demodulates the received communication signal according to the first demodulation scheme, and generates one or more bits representing the first modulation state of the signal. An intermediate demodulation circuit removes the first modulation from the received communication signal to generate an intermediate demodulation signal having only the second modulation. A second demodulation stage demodulates the intermediate demodulation signal according to the second demodulation scheme and generates one or more additional bits representing the second modulation state of the given communication signal. Optionally, another demodulation stage removes the first modulation and the second modulation from the given communication signal, detects a third modulation and generates additional bits representing the third modulation state.

## Description

The technical field relates generally to multi-bit phase encoded modulation/demodulation.

Digital signal communication exists in a vast range of consumer services, business operations, academic, governmental, medical and military services and operations. The range and scope of activities in which digital communication is used is, in fact, not susceptible to a concise description. Instead of categorizing and classifying the technical universe of digital signal communications according to the services, activities or operations to which the communications apply, though, there are two characteristics that are practical for many classification or rating purposes, which are: the "number of bits per symbol" and the "bit rate" in bits per second.

The term "bit" may be defined, for purposes of understanding concepts of the embodiments described herein, according to its information theory meaning as a two-state unit of information (logical "0" and logical "1 ") and, therefore, the "bit rate" may be viewed as the information rate. As is well known to persons of ordinary skill in the art of digital communications, such communications may be performed by transmitting an energy having a state selectively movable, i.e., capable of being modulated, along each ofN orthogonal axis that form an N-dimensional state space. The state vector of the signal represents a symbol and, therefore, for a symbol to represent M bits, the signal must be capable of being modulated to any one of 2^{M} possible states (i.e., a 1-bit signal may be modulated to any one of two states; a 2-bit signal may be modulated to any one of four states). An example communication system provides M bits per symbol by modulating an energy signal, such as a sinusoidal wave, to a selected one of 2^{M} different state positions within the N-dimensional state space.

In general, there is a correlation between the number of bits M encoded in a modulated signal and the computational complexity of the demodulation process. For example, binary phase shift keying (BPSK), encoding a single bit of data, is technically much simpler than quadrature phase shift keying (QPSK), which encodes two bits of data. A three bit per symbol phase shift keying (PSK) coding scheme requires a demodulation process of even higher technical complexity. This technical complexity has, in the known art, limited the scope of modulation schemes usable in portable, low power, low cost devices and, concurrently, limited the bit rate achievable by such devices.

One example system according to various exemplary embodiments includes a multi-stage demodulation circuit, structured to receive a given communication signal modulated by a superposition of a first modulation scheme to represent Q bits of a given S bit symbol and by a second modulation scheme to represent R bits of the remaining S bits of the symbol, having a first demodulation stage to demodulate the received communication signal according to the first demodulation scheme to extract the Q bits and a second demodulation stage to demodulate the received communication signal according to the second demodulation scheme to extract the R bits of the remaining S bits.

One example apparatus according to various exemplary embodiments includes a first demodulation circuit to receive a given communication signal modulated by a superposition of a first modulation scheme to represent Q bits of a given S bit symbol and by a second modulation scheme to represent R bits of the remaining S bits of the symbol, the first demodulation circuit having structure to detect the first modulation state and to generate a corresponding Q bits based on the detected first modulation state, arranged with an intermediate demodulation circuit to remove the first demodulation state from the received communication signal and to generate a corresponding intermediate demodulation signal having the second modulation state, and a second demodulation circuit to detect the second modulation state and to generate a corresponding R bits of the remaining S bits based on said detected second modulation state.

According to one aspect of one or more exemplary embodiments, the first demodulation stage is constructed to perform a phase shift keying demodulation of the received communication signal to extract and generate the Q bits.

According to one aspect of one or more exemplary embodiments, the first demodulation stage is constructed to perform a binary phase shift keying (BPSK) demodulation of the received communication signal to extract and generate one bit as the Q bits, with Q being one of a 0 state and 1 state depending to a BPSK phase state of the received communication signal.

According to one aspect of one or more exemplary embodiments, a first demodulation circuit is constructed to perform a first modulation scheme PSK demodulation of the received communication signal to extract and generate the Q bits, an intermediate demodulation stage to remove a PSK state from the received communication signal based on the Q bits and generate a corresponding intermediate demodulation signal having a second modulation state according to a phase jitter modulation (PJM) scheme, and a second demodulation circuit constructed to detect the intermediate demodulation signal's phase state within the PJM scheme and to generate a corresponding R bits based on the detected phase state.

According to one aspect of various exemplary embodiments, the second demodulation stage extracts R bits such that R is equal to S - Q, wherein the first demodulation stage and the second demodulation stage extract all S bits.

According to another aspect of various exemplary embodiments, the multi-stage demodulation system comprises another demodulation stage, wherein the second demodulation stage extracts R bits such that R is less than S - Q, wherein the another demodulation stage extracts a remaining S - (R + Q bits of the S bits.

The above-summarized illustrative examples of embodiments and of illustrations, as well as the above illustrative advantages, features and benefits of each are not intended to be exhaustive or limiting. Other advantages will be apparent from the various embodiments and aspects that are further described with illustrative detail, and persons of ordinary skill in the art will, upon reading this disclosure, readily identify further variations within the scope of the appended claims.
Fig. 1 shows one example BPSK I-Q symbol constellation;
Fig. 2 shows one example PJM I-Q symbol constellation;
Fig. 3 shows one example BPSK - PJM I-Q superposed symbol constellation;
Fig. 4 shows one example high level functional block diagram representation of one example architecture of, and one example environment for practicing according to various exemplary embodiments a multi-stage demodulation of various superposed multi-level modulation signals according to various exemplary embodiments; and
Fig. 5 shows one example detailed functional block diagram representation of one example implementation of, and one example environment for practicing according to various exemplary embodiments an example PSK first stage and PJM second state implementation of one example multi-stage demodulation of a PSK-PJM superposed multi-level modulation signals according to one or more exemplary embodiment.

Various illustrative examples of multi-stage demodulation circuits and systems according to various exemplary embodiments as well a various examples of various sub-sections and sub-structures, are described. The specific examples are only for illustrative purposes, to assist a person of ordinary skill in the art of digital communications and signal phase modulation in forming an understanding of the concepts sufficient for such a person, applying the knowledge and skills such persons possess, to practice the invention. The scope of structures, arrangements and materials capable of practicing and implementing one or more of the embodiments, though, is not limited to these specific illustrative examples.

The figures are included to assist, by way of graphical illustration, persons of ordinary skill in the art in forming a clear understanding of the subject matter. It will be understood that the figures are not hardware specifications or fabrication drawings; graphical symbols may, for example, be sized and placed for ease of viewing and not to represent a structural quantity.

To avoid obscuring novel features and aspects of the embodiments, unnecessary details of various technical background that is known to persons of ordinary skill in the art, are omitted.

Example embodiments and aspects may be described separately, and as having certain differences. Separate description or description of differences, however, does not necessarily mean the respective embodiments or aspects are mutually exclusive. For example, a particular feature, function, or characteristic described in relation to one embodiment may be included in, or adapted for other embodiments.

Various embodiments disclosed herein relate to a method for demodulating a received signal embodying at least a second modulation state superposed on a first modulation state. The method comprises a first step of demodulating the received signal to detect the first demodulation state and generate Q bits representing the first demodulation state; a second step of removing the first demodulation state from the received signal to generate an intermediate signal having the second modulation state; and a third step of demodulating the intermediate signal to generate R bits based on the second modulation state.

Further embodiments disclosed herein relate to a system for demodulating the received signal comprising at least a first stage or circuit that demodulates the received communication signal to detect the first modulation state and generates Q bits representing that state, an intermediate demodulation circuit that removes the first demodulation state from the received communication signal to generate an intermediate signal having the second modulation state, and a second stage or circuit that demodulates the intermediate signal to generate the remaining bits R bits based on the second modulation state.

Although the first demodulation stage may apply any demodulation scheme, in accordance with whatever first stage modulation is embodied by the received communication signal, various embodiments include a first stage that applies phase shift keying demodulation. The selection of the particular phase shift keying modulation and demodulation that is employed by the first stage may depend on the needs of the user. For example, quadrature phase shift keying (QPSK) allows more data to be encoded than binary phase shift keying (BPSK); however, BPSK is less complicated to implement and more robust.

Although the second demodulation stage may apply any demodulation scheme, various embodiments use phase jitter modulation (PJM) or frequency shift keying. The selection of the particular modulation may depend on the needs of the user. In various example embodiments, particular those using PSK in the first stage, PJM is preferred because it operates in the same signal domain as that PSK, which may make design considerations easier when implementing and setting parameters for the first stage and the second stage in view of one another.

Demodulation systems and apparatuses according to the various examples and embodiments may employ, in a unique arrangement, various well-known types of circuits for performing, as a feature of the novel arrangement and combination, demodulation of signals carrying two, three, or more bits per symbol. These circuits are readily implemented with analog circuitry and therefore readily incorporated into smart cards, electronic passports, and other electronic documents. Such devices can therefore attain the high bit rate normally obtained using Quadrature Amplitude Modulation (QAM), without incurring the high processing overhead, and hence cost, required for QAM demodulation.

As one illustrative example, in the known art three (3) bit symbols can be transmitted using an 8-state QAM coding scheme. QAM does this by modulating the phase or both phase and the amplitude of a sine wave carrier in a manner defined by a constellation of 8 states defined on the I-Q chart. Decoding is typically done by digitizing the received signal, with a high speed analog-to-digital decoder, and then feeding the digital samples to a processor chip, which extracts the phase and amplitude of the carrier and, hence, the three bits. Such processing is typically not feasible in small portable devices such as smart cards and other electronic documents.

The embodiments disclosed herein, however, accomplish this demodulation of a signal having three or more bits per symbol with, for example, simple analog circuits. Further among the carious features and benefits, the various embodiments provide a bit rate improvement, compared to conventional BPSK, of, for example, approximately 4x in examples using BPSK for the first stage and four-state PJM for the second stage, to 8x in examples using QPSK for the first stage and four-state PJM for the second stage.

The concepts of the present embodiments, further, are not limited to short range communications, e.g., smart cards, but may also be applied in long range communications, e.g., cell phone and satellite phone systems.

Referring now to the figures, illustrative examples of and among the various arrangements, architectures, systems and structures for practicing one or more of the various example embodiments will be described.

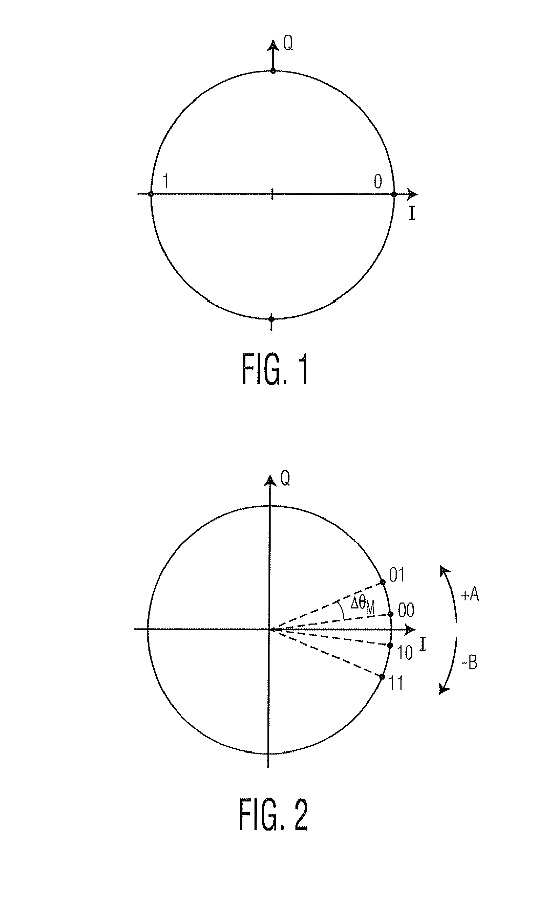

Fig. 1 shows a binary phase shift keying (BPSK) symbol constellation. In a signal modulated according to a BPSK symbol constellation, there are two possible states to be decoded. BPSK uses two phases which are separated by 180°. It does not particularly matter exactly where the constellation points are positioned, and in this figure they are shown on the real axis, at 0° and 180° (as seen in Fig. 1). BPSK modulation is often viewed as the most robust of all PSKs; however, since BPSK only offers two possible states, it is only able to modulate at 1 bit/symbol (Q = 1). In another preferred embodiment, a quadrature phase shift keying (QPSK) symbol constellation may be used for the modulation state detected and decoded by the first stage demodulator. A QPSK symbol constellation may be represented on the diagram of FIG. 1 as having four phase states equally spaced around the I-Q circle at positions of 0°, 90°, 180°, and 270°. The four phase states each have values of 11, 01, 10, and 00. With four phase positions, QPSK can encode two bits per symbol (Q = 2), twice the rate of BPSK.

In various embodiments, phase jitter modulation (PJM) is used for the second modulation state. PJM is a form of Phase Shift Keying (PSK) that employs very small phase deviations, on the order of, for example, ±1 deg to ±2 deg between adjacent positions. As seen in the example phase jitter symbol constellation of FIG. 2, phase jitter modulation may provide, for example, four possible values, represented by phase deviations separated by an angle of Δθ_{M} where two possible phase states are rotated by ±½( Δθ_{M}) and two possible phase states are rotated by ±3/2( Δθ_{M}). In the FIG. 2 example, phase jitter modulation carries two bits of data (R = 2). In the Fig. 2 example, the first bit of data is encoded by the direction of phase deviation of the carrier signal. Rotation of the signal phase in a positive direction (represented in Fig. 2 by arrow +A) represents one of a value of 0 or a value of l; rotation of the signal phase in a negative direction (represented in Fig. 2 by arrow -B) represents the other of a value of 0 or a value of 1. The second bit of data is encoded by the magnitude of phase deviation of the carrier signal. The absolute magnitude of the phase deviation may be ½( Δθ_{M}), representing one of a value of 0 or a value of l, or 3/2( Δθ_{M}), representing the other of a value of 0 or a value of 1. Thus, as seen in Fig. 2, phase jitter modulation allows four possible two-bit states, representing values of 00, 01, 10, and 11.

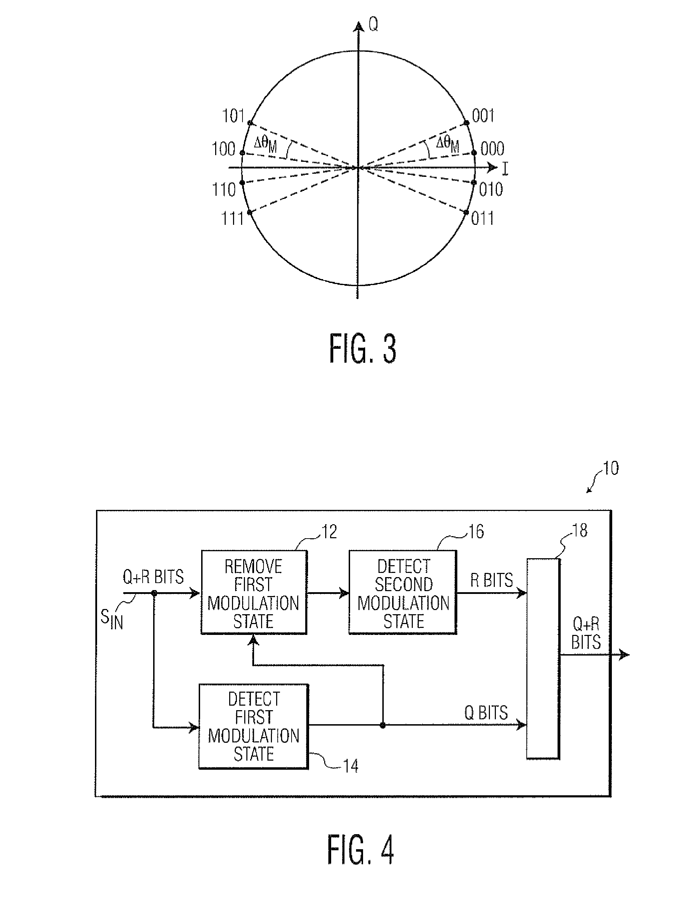

Fig. 3 shows a superposed symbol constellation derived from imposing a second phase modulation state on top of a signal previously encoded with a first phase modulation state, where the first phase modulation state is a BPSK phase modulation state and the second first phase modulation state is a phase jitter phase modulation state. The Fig. 3 example provides a signal carrying three bits per symbol state. More specifically, a BPSK phase modulation state encodes one bit of the three data bits by causing a given carrier signal to adopt one of two phases separated from each other by 180°. The example four-state phase jitter phase modulation scheme then encodes the remaining two bits of the three data bits by rotating the signal by ±½ (ΔθM) or ±3/2(ΔθM) from its BPSK phase state. Thus, a given phase modulated signal can be modulated according to the FIG. 3 example to carry any of eight possible values, and therefore, can carry three bits per symbol. As will be understood from this disclosure, various example systems and methods according to various exemplary embodiments provide a novel multi-state demodulation that, according to one or more aspects, may demodulate a three bit per symbol scheme such as depicted at Fig. 3, employing analog circuits.

Methods and systems according to various examples or embodiments may use more than two stages of demodulation. For example, three stages of modulation may be superposed on a given communication signal. As one illustrative example, BPSK may be superposed with phase shift modulation and with an additional modulation scheme, such as, for example, another binary frequency shift keying modulation. One further illustrative example of a three stage method and system according to various exemplary embodiments may comprise a first BPSK stage applying, for example, 0 and 180 degree phase states, followed by a second BPSK stage applying, or example, ± 90 degrees, followed by a four-phase PJM stage. The superposition of the first and the second BPSK stages therefore provides a total phase space of 0, 90, 180 and 270 degrees, which effectively provides a QPSK phase space, but using two BPSK circuits instead of a typically more complex QPSK demodulation circuit. The four-phase PJM third stage yields a total system phase space of 16 phases, i.e., 4 bits. Another illustrative example of a three stage method and system according to various exemplary embodiments may comprise a first BPSK stage applying, for example, ± 90 degree phase states, followed by a second BPSK stage applying, or example, ± 45 degrees, followed by a four-phase PJM stage.

In various embodiments, each of the first modulation state and the superimposed second modulation state may encode the same number of bits or a different number of bits. For example, the first phase modulation state may be a QPSK phase modulation state carrying two bits of data (Q = 2) and the second first phase modulation state may be a phase jitter phase modulation state also carrying two bits of data (R = 2); the resulting signal may therefore carry any of sixteen possible values. For an example additional flexibility, a Costas loop QPSK demodulator may be used to decode a BPSK as well. Thus, a single Costas loop device may be used at, for example, the first stage of a multi-stage demodulation apparatus according to the various exemplary embodiments and therefore provide a flexibility to provide either BPSK or QPSK demodulation. As will be understood from this disclosure, various exemplary embodiments provide demodulation of, for illustrative example, either a four bit per symbol scheme with QPSK modulation or a three bit per symbol scheme with BPSK modulation.

Fig. 4 shows one example of a high level functional block diagram representation of an example architecture of a multi-stage demodulation of various superposed multi-level modulation signals according to various embodiments. Referring to Fig. 4, an incoming signal S_{IN} has a first modulation state defining Q bits of data and a second modulation state defining R bits of data superposed on the first modulation state. The incoming signal S_{IN} is split into two identical first and second signals. The splitting may be performed by a power splitter (not shown). The first signal is fed into detector 14, which detects the first modulation state of the first signal and outputs a signal corresponding to the Q bits of data defined by the first modulation state. The output signal from detector 14 is fed into intermediate demodulation circuit 12, which uses the Q bits of data defined by the first modulation state to remove the first modulation state from the second signal. The second signal is then fed into detector 16, which detects the second modulation state of the second signal and outputs a signal corresponding to the R bits of data defined by the second modulation state. The Q bits of data and R bits of data may be part of the same data stream, in which the Q bits and R bits of data may be optionally recombined in a combining circuit by, for example, appending the R bits of data to the Q bits of data. The Q bits of data may be part of a separate data stream from the R bits of data.

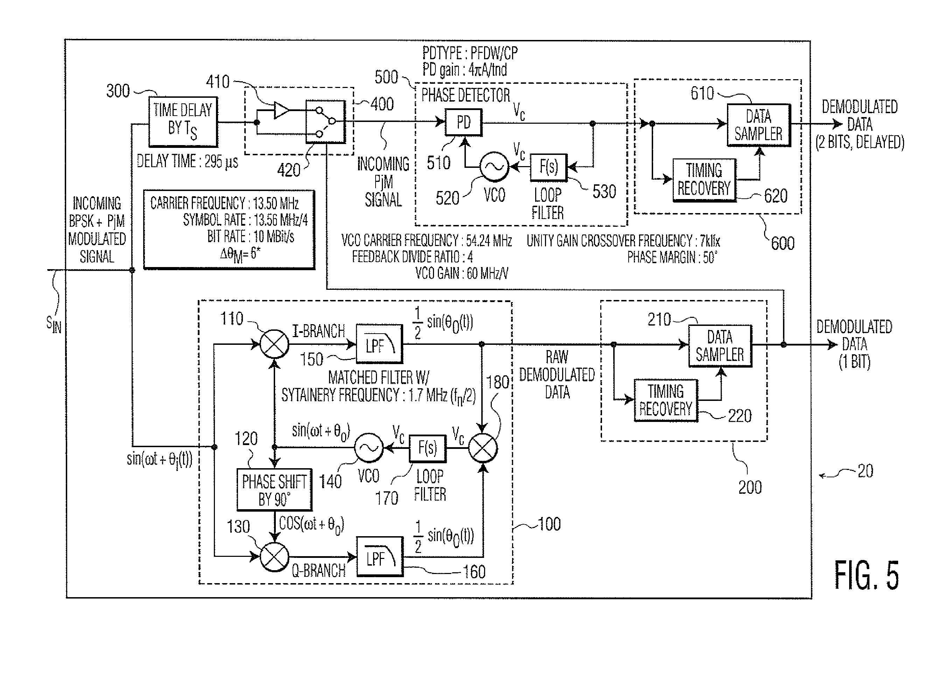

Fig. 5 shows one illustrative implementation of an example of a receiver equipped with a multi-stage demodulator according to one or more various exemplary embodiments. A received signal S_{IN} containing a signal modulated with a first BPSK modulation overlaid with a second phase jitter modulation is input to a receiver 20, where the signal is split into identical first and second signals (not separately numbered). The first signal is fed into an example demodulator Costas loop as shown in Fig. 5, which includes a voltage-controlled oscillator (VCO) 140, an I-branch and a Q-branch. The first signal is split a second time, and one of these signals is fed into the I-branch of the Costas loop and the other is fed into the Q-branch. The I-branch includes an in-phase mixer 110 and a lowpass filter 150, while the Q-branch includes a quadrature-phase mixer 130 which shifts the signal by 90°, and a lowpass filter 160. At this point, the signals in the I-branch and the Q-branch are 90° out of phase, and are fed into mixer 180. The output of mixer 180 is fed through loop filter 170 to voltage-controlled oscillator 140. The output of the voltage-controlled oscillator 140 is coupled to the in-phase mixer 110 and the quadrature-phase mixer implemented by the combination of 120 and 130.

The Costas loop uses the in-phase mixer 110 to generate an in-phase-baseband signal by mixing a received signal with sinωₒt from the voltage-controlled oscillator, and a quadrature-phase mixer 120,130 to generate a quadrature-phase-baseband signal by mixing the received signal with cosωₒt from the voltage-controlled oscillator.

Referring to Fig. 5, the Costas loop is only one example of a possible implementation of a BPSK first stage demodulator. As one example alternative for the Costas loop, a Squaring-Loop or a Correlation-Type-Demodulator can be employed.

The Correlation-Type Demodulator generates multiple delayed versions of an in phase carrier (e.g. 0°, 90°, 180° and 270°). Each phase shifted signal is multiplied together with the incoming signal. The squaring loop squares the input signal and uses a PLL to lock on the double frequency component (resulting from squaring the input signal) to reconstruct an in-phase clock signal. The reconstructed in-phase clock signal can then be used to detect the symbol.

The branch with the highest average value corresponds to the detected phase.

The in-phase-baseband signal is fed to a data sampler section 200 to determine the phase of the in-phase-baseband signal, and hence, whether the first stage of demodulation corresponds to a 0 or a 1. The data sampler section 200 includes a data sampler 210, and a timing recovery circuit 220 which provides the sampling time signal for the data sampler section 200. Data sampler 210 determines the phase of the in-phase-baseband signal, and hence the phase of the BPSK modulation imposed on the received signal. Based on the phase of the BPSK modulation, it is determined whether the first bit of the data carried by the received signal is 0 or 1.

Based on the phase of the BPSK modulation, the received signal S_{IN} is delayed and inverted or not inverted prior to input to the PJM demodulator. As will be understood, selectively inverting the received signal S_{IN} removes the BPSK modulation from the signal S_{IN}, leaving only the phase jitter modulation in the signal that is input to the PJM demodulator. More particularly, the second signal input to a time delay circuit 300 which delays demodulation of the PJM modulation of the second signal by a sufficient time to complete demodulation of the BPSK signal in the Costas loop. After leaving delay circuit 300, the second signal is fed to phase inverter 400. Phase inverter 400 includes a phase inversion circuit 410 and a switch 420 which allows the second signal to be inverted, or to bypass the inverter 410. The switch is operated in response to the value of the first bit of data from BPSK demodulation, or the presence or absence of phase inversion in the BPSK signal. This allows phase inversion from BPSK modulation to be removed from the second signal by passing phase inverted signals through the inverter. The second PJM-modulated signal then enters the PJM phase demodulator 500.

With continuing reference to Fig. 5, demodulator 500 includes a phase detector 510 with two inputs. The two inputs of the phase detector 510 are the second PJM-modulated signal and a feedback from voltage controlled oscillator 520. The phase detector 510 output controls the voltage controlled oscillator 520 such that the phase difference between the two inputs is held constant, making it a negative feedback system whereby the dynamics of the loops are controlled by the loops filter 530. The phase detector may be modeled as an ideal frequency mixer, and then implemented by, for example, a conventional technology mixer having parameters selected to provide acceptable phase detection. This device produces an output that is the product of the two input voltages. The loop is called "locked" when the voltage controlled oscillator 520 is on the same frequency as the second PJM-modulated signal and differs only in some amount of phase. The magnitude and direction of the phase difference between the second PJM-modulated signal and a feedback from voltage controlled oscillator 520 is determined by a data sampler 600.

Continuing to refer to Fig. 5, the data sampler section 600 includes a data sampler unit 610, and a timing recovery circuit 620 which provides the sampling time signal for the data sampler section 600. Data sampler unit 610 determines the magnitude and direction of the phase difference between the second PJM-modulated signal and the feedback from voltage controlled oscillator 520. Based on the direction of the phase difference, it is determined whether the first bit of the data carried by the second PJM-modulated signal is 0 or 1. Based on the magnitude of the phase difference Δθ_{M} it is determined whether the second bit of the data carried by the second PJM-modulated signal is 0 or 1.

The actual value of Δθ_{M} is a design choice, readily made by persons of ordinary skill in the phase modulation arts upon reading the present disclosure. As will be understood, a large Δθ_{M} increases the influence of the nonlinearities, including higher signal amplitudes within the circuit phase detector circuit. Also, if an in phase clock signal is to be derived from the phase locked loop of the PJM demodulator a higher value of Δθ_{M} also increases the amount that the VCO is deflected, which in turn results in a less clean clock signal. The lower limit of Δθ_{M} is given by the internal phase noise of the circuit. The phase noise must be well below the actual modulation Δθ_{M}. If Δθ_{M} is made to small the error rate will increase.

The combination of BPSK demodulation and PJM demodulation concept of this example according to one or more various exemplary embodiments provides demodulation of a phase modulated signal carrying, for example, 3 or more bits of data per symbol - without requiring an analog-to-digital converter, and without requiring a digital data processing capability that is often infeasible to implement in, for example, smart cards and other portable electronic documents. The combination of BPSK demodulation and PJM demodulation concept of this example provides double the amount of data carried by the example PJM modulation alone, and quadruples the data carried by simple BPSK modulation. Therefore, the combination enhances the transmission rate based on analog elements.

Various exemplary embodiments relate to a method for multistage modulation. In various exemplary embodiments, a two stage modulation is carried out in a first stage and a second stage. According to one aspect, the first stage modulation is BPSK and, accordingly, in the first stage the signal gets either inverted or not to apply a BPSK modulation to the signal. In the example employing BPSK first stage modulation, the inversion may be done using either an analog phase inverter or a digital phase inverter. According to one example, a phase jitter modulation may be applied for a second stage modulation. In the second stage of such an example, a small phase excursion or phase jitter is applied to the BPSK-modulated signal.

Although the various exemplary embodiments have been described in detail with particular reference to certain exemplary aspects thereof, it should be understood that the invention is capable of other embodiments and its details are capable of modifications in various obvious respects. As is readily apparent to those skilled in the art, variations and modifications can be affected while remaining within the spirit and scope of the invention.

Accordingly, the foregoing disclosure, description, and figures are for illustrative purposes only and do not in any way limit the invention, which is defined only by the claims.

## Claims

1. A multi-stage demodulation apparatus comprising:
- a first demodulation circuit to receive a given communication signal having a first modulation state superimposed on a second modulation state, the first modulation state representing Q bits and the second modulation state representing R bits, the first demodulation circuit having structure to detect the first modulation state and to generate a corresponding Q bits based on said detected first modulation state; and
- a second demodulation circuit having structure to receive the given communication signal and the detected first modulation state and, based in part on the detected first modulation state, to detect the second modulation state and generate the corresponding R bits.

2. The demodulation apparatus of claim 1, wherein the first demodulation circuit includes a phase shift keying (PSK) demodulation circuit having structure to detect a PSK phase state of the received communication signal and generate the Q bits having values depending on said detected PSK phase state.

3. A demodulation method comprising:
- receiving a given communication signal having a first modulation state superimposed on a second modulation state, the first modulation state representing Q bits of data and the second modulation state representing R bits of data,
- detecting the first modulation state and generating a corresponding Q bits based on said detected first modulation state; and
- detecting the second modulation state based in part on the detected first modulation state and generating a corresponding R bits based on said detected second modulation state.

4. The demodulation method of claim 3, wherein the detecting the first modulation state includes detecting a PSK phase state of the received communication signal and generating the Q bits having values depending on said detected PSK phase state.

5. The demodulation method of claim 4, wherein the detecting the first modulation state circuit includes detecting binary phase shift keying (BPSK) state of the received communication signal and generating one bit as the Q bits, with Q being one of a 0 state and 1 state depending on said BPSK phase state.

6. The demodulation method of claim 3, wherein detecting the second demodulation state comprises:
- removing the first modulation state from the received communication signal based on said detected first modulation state, and generating a corresponding intermediate demodulation signal having the second modulation state; and
- detecting the second modulation state of the intermediate modulation signal and, based on said detected second demodulation state, to generate the corresponding R bits.

7. The demodulation method of claim 6, wherein the detecting the first modulation state includes detecting a PSK phase state of the received communication signal and generating the Q bits having values depending on said detected PSK phase state, and
wherein said removing the detected first modulation phase state from the received communication signal is based on the Q bits.

8. The demodulation method of claim 7, wherein said detecting the second modulation state includes detecting a phase jitter modulation (PJM) phase state of the intermediate demodulation signal within a given PJM scheme and generating a corresponding R bits based on said detected phase state.

9. The demodulation method of claim 3, wherein said detecting the second modulation state includes removing the first modulation state from the received communication signal based on said detected first modulation state, and generating a carrier signal modulated by only the second modulation state; and
wherein said detecting the second modulation state of the carrier signal is based in part on said detected first demodulation state, to generate the corresponding R bits.

10. The demodulation method of claim 9, wherein said detecting the first modulation state includes detecting a PSK phase state of the received communication signal and generating the Q bits having values depending on said detected PSK phase state, and
wherein said removing the detected first modulation phase state from the received communication signal is based on the Q bits.

11. The demodulation method of claim 9, wherein said detecting the second modulation state includes detecting a phase jitter modulation (PJM) state of the intermediate demodulation signal within a given PJM scheme and to generate a corresponding R bits based on said detected phase state.

12. The demodulation method of claim 3, wherein said given communication signal includes having a first modulation state superimposed on a second modulation state superimposed on a third modulation state further includes, the first modulation state representing Q bits of data and the second modulation state representing R bits of data, and the third modulation state representing at least one additional bit of data, further comprising:
- detecting the third modulation state based, in part, on the detected first modulation state and the detected second modulation state, and generating the corresponding at least one additional bit based on said detected third modulation state.

13. The demodulation method of claim 12,
wherein said detecting the second demodulation state comprises:
- removing the first modulation state from the received communication signal based on said detected first modulation state, and generating a corresponding carrier signal having only the second modulation state and the third modulation state; and
- detecting the second modulation state of the carrier signal having only the second modulation state and the third modulation state and generating the corresponding R bits based on the detected second modulation state, and wherein said detecting the third demodulation state comprises:
- removing the first modulation state and the second modulation state from the received communication signal based on said detected first modulation state and said detected second modulation state and generating said at least one additional bit based on said detected third modulation state.

14. The demodulation method of claim 13 wherein said given communication signal includes having a first BPSK phase state superimposed on a second BPSK phase state superimposed on a pulse jitter modulation (PJM) phase state,
wherein said detecting the second modulation state includes:
- removing the first BPSK state from the received communication signal based on said detected first modulation state, and generating a corresponding carrier signal having only the second BPSK phase state and the PJM phase state; and
- detecting the second BPSK phase state of the carrier signal having only the second BPSK phase state and the PJM phase state and generating the corresponding R bits based on the detected second BPSK phase state, and wherein said detecting the PJM phase state comprises:
- removing the first BPSK phase state and the second BPSK phase state from the received communication signal based on said detected first BPSK phase state and said detected second BPSK phase, and
- detecting the third PJMM phase state after said removing and generating said at least one additional bit based on said detected third phase state.

15. A method for modulating and demodulating a signal, comprising:
- generating a given communication signal having a first modulation state superimposed on a second modulation state, the first modulation state representing Q bits of data and the second modulation state representing R bits of data,
- receiving the given communication signal,
- detecting the first modulation state and generating a corresponding Q bits based on said detected first modulation state;
- detecting the second modulation state based, in part, on the detected first modulation state, and generating a corresponding R bits based on said detected second modulation state.
